# EUROPÄISCHE PATENTSCHRIFT

(11) **EP 3 633 125 B1**
(45) Veröffentlichungstag und Bekanntmachung des Hinweises auf die Patenterteilung: **21.07.2021**
(21) Anmeldenummer: 19200136.0
(22) Anmeldetag: 27.09.2019
(51) Int. Cl.: E05B 85/12, E05B 17/10, B60Q 3/267

(54) **BELEUCHTETE INNENTÜRGRIFFVORRICHTUNG ZUR BETÄTIGUNG EINER VERRIEGELUNG EINER TÜR EINES FAHRZEUGS VON DER INNENSEITE**
ILLUMINATED INTERNAL DOOR HANDLE DEVICE FOR ACTUATING A LOCK OF A DOOR OF A VEHICLE FROM THE INSIDE
DISPOSITIF DE POIGNÉE DE PORTE INTÉRIEURE ÉCLAIRÉ DESTINÉ À L'ACTIONNEMENT D'UN VERROU D'UNE PORTE D'UN VÉHICULE DE L'INTÉRIEUR

(30) Priorität: 02.10.2018 AT 3032018
(43) Veröffentlichungstag der Anmeldung: 08.04.2020
(73) Patentinhaber: MAN Truck & Bus Österreich GesmbH, 4400 Steyr (AT)
(72) Erfinder: Stastny, Christian, 4030 Linz (AT); Grillnberger, Eva, 4441 Behamberg (AT)
(74) Vertreter: v. Bezold & Partner Patentanwälte - PartG mbB

(56) Entgegenhaltungen:
- WO-A1-2017/069008
- DE-A1- 3 710 447
- DE-A1-102009 033 880
- DE-U1-202017 101 493
- US-A1- 2001 006 465
- US-A1- 2003 031 025
- US-A1- 2007 024 420
- US-A1- 2014 145 611

## Beschreibung

Die Erfindung betrifft eine Innentürgriffvorrichtung zur Betätigung einer Verriegelung einer Tür eines Fahrzeugs von der Innenseite, umfassend eine Griffschale, einen daran beweglich gelagerten Türgriff und mindestens eine Lichtquelle zur Beleuchtung des Türgriffs.

Derartige beleuchtete Innentürgriffe sind aus dem Stand der Technik bekannt.

So offenbart die Offenlegungsschrift DE 10 2005 041 198 A1 einen Türgriff für die Betätigung einer Verriegelung einer Tür eines Automobils von der Innenseite, mit einer Lichtquelle zur Beleuchtung des Türgriffs. Hierbei besteht zumindest ein Abschnitt des Türgriffs aus einem transparenten Material, der mit einer dünnen, farbgebenden, schwach lichtdurchlässigen Schicht überzogen ist und die Lichtquelle im Bereich des transparenten Abschnitts angeordnet ist.

Das Vorsehen eines Türgriffs aus einem transparenten Material bedingt in der Regel höhere Herstellungskosten im Vergleich zu herkömmlichen Türgriffen. Entsprechendes gilt für die aus DE 20 2005 00359 U1 bekannte Griffschale für einen Türgriff, die eine transparente Beleuchtungskappe aufweist, die rückseitig mit einer Lichtquelle beaufschlagbar ist.

Dokument US 2001/006465 A1 offenbart eine mit einer LED-Lichtquelle versehene Lampeneinheit, die an der Rückseite einer inneren Griffschale angebracht ist. Die innere Griffschale ist zusammen mit der Lampeneinheit in eine Türverkleidung eingebaut.

Dokument WO 2017/069008 A1 offenbart einen stabförmigen Lichtleiter, der in einer Innenverkleidung angeordnet ist, ein Halteelement des Lichtleiters und einen Übertragungsabschnitt der Innenverkleidung, wobei eine Emissionsfläche des Lichtleiters dem Übertragungsabschnitt zugewandt ist. Die Halteelemente erschrecken sich über die Innenverkleidung hinaus und weisen an ihren vorderen Endabschnitten Eingriffskörper auf, die mit einer ersten Seitenfläche des Lichtleiters in Eingriff stehen. Die Innenverkleidung umfasst ferner Stützabschnitte und Stufenabschnitte, wobei sich die Stützabschnitte über eine zweite Seitenfläche des Lichtleiters, die der ersten Seitenfläche gegenüberliegt, erstrecken, um die Emissionsfläche zu erreichen. Die Stufenabschnitte verbinden die Stützabschnitte und den Übertragungsabschnitt.

Dokument DE 10 2009 033 880 A1 offenbart eine Griffanordnung, umfassend eine Blende mit einer Griffmulde, die durch eine Muldenwand definiert ist. Die Blende weist einen durch die Muldenwand hindurchgehenden Schlitz auf, in dessen Nähe eine Lampenanordnung angebracht ist. Die Lampenanordnung weist ein Gehäuse und ein von dem Gehäuse gehaltenes Lichtrohr auf, wobei das Lichtrohr einen ersten Schenkel, der sich entlang einer primären Achse erstreckt, und einen zweiten Schenkel aufweist, der sich entlang einer zu der primären Achse im Wesentlichen rechtwinkligen sekundären Achse erstreckt. Der zweite Schenkel weist eine Linse entlang einer Innenfläche des zweiten Schenkels auf, wobei Licht durch den ersten und den zweiten Schenkel zu der Linse hin geleitet wird.

Entsprechend ist es daher eine Aufgabe der Erfindung eine Beleuchtung für einen Innentürgriff bereitzustellen, mit der Nachteile bekannter Lösungen vermieden werden können. Es ist insbesondere eine Aufgabe der Erfindung, eine einfache und kostengünstige Möglichkeit bereitzustellen, eine Auffindungsbeleuchtung für einen Innentürgriff bereitzustellen, mit der insbesondere auch herkömmliche Türgriffe nachgerüstet werden können.

Diese Aufgaben werden erfindungsgemäß durch eine Innentürgriffvorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird einen Innentürgriffvorrichtung zur Betätigung einer Verriegelung einer Tür eines Fahrzeugs von der Innenseite bereitgestellt, die eine Griffschale, einen daran beweglich gelagerten Türgriff und mindestens eine Lichtquelle zur Beleuchtung des Türgriffs umfasst. Der Türgriff kann auch als Betätigungshebel bezeichnet werden.

Erfindungsgemäß weist die Griffschale mehrere Durchgangsöffnungen auf, wobei die Lichtquelle im Bereich der Durchgangsöffnungen auf einer dem Fahrzeuginnenraum abgewandten Seite der Griffschale angeordnet ist, so dass der Türgriff über durch die Durchgangsöffnungen austretendes Licht der Lichtquelle beleuchtbar ist.

Auf diese Weise wird die Haptik an den Innenseiten der Griffschalen nicht verändert, da keine dort vorstehenden Leuchtmittel vonnöten sind. Ferner kann hierdurch eine Verletzungsgefahr bei der Bedienung des Türöffnungsmechanismus bzw. eine Beschädigungsgefahr der Lichtquelle bei der Bedienung vermieden werden. Ein weiterer Vorteil ist, dass zur Beleuchtung des Türgriffes auf transparente oder semitransparente Materialien bei der Ausbildung des Türgriffes oder der Griffschale verzichtet werden kann. Mit anderen Worten kann die Griffschale und/oder der Türgriff durch ein herkömmliches lichtundurchlässiges Material gebildet sein.

Ferner können derartige Durchgangsöffnungen z. B. als Bohrungen auf einfache Weise auch nachträglich durch mechanische Bearbeitung der Griffschale eingebracht werden. Der erfindungsgemäße Ansatz bietet somit den besonderen Vorzug, dass damit auf einfache und kostengünstige Weise herkömmliche Türgriffe mit einer Beleuchtung nachgerüstet werden können. Zusätzlich zu den Durchgangsöffnungen ist dann noch eine geeignete Lichtquelle hinter der Griffschale im Bereich der Durchgangsöffnungen anzuordnen, d. h. z. B. zwischen Griffschale und Türinnenverkleidung.

Vorstehend wurde bereits erwähnt, dass die Durchgangsöffnungen als Durchgangsbohrungen durch die Griffschale ausgeführt sein können, was herstellungstechnisch einfach und kostengünstig zu realisieren ist.

Gemäß einer vorteilhaften Ausführungsform können die Durchgangsöffnungen in einem oberen Bereich der Griffschale angeordnet sein. Dies ermöglicht die Beleuchtung des Türgriffs von oben, was dessen Auffindbarkeit für eine Bedienperson erleichtert. Es wird jedoch betont, dass die Anordnung der Durchgangsöffnungen und/oder der Lichtquelle nicht auf den oberen Bereich der Griffschale beschränkt ist, sondern auch an einer anderen Stelle der Griffschale erfolgen kann.

Erfindungsgemäß ist die Lichtquelle eine LED-basierte Lichtquelle. Derartige LED-Lichtquellen sind energieeffizient, kostengünstig und baulich kompakt und platzsparend.

Die LED-Lichtquelle ist als LED-Streifen, vorzugsweise als selbstklebender LED-Streifen ausgeführt. Erfindungsgemäß sind mehrere Durchgangsöffnungen vorgesehen, wobei eine Anzahl und ein Abstand der LEDs des LED-Streifens einer Anzahl und einem Abstand der Durchgangsöffnungen entsprechen. Dies ermöglicht ein einfaches Anbringen der Lichtquelle an der Griffschale, insbesondere beim Nachrüsten einer Türgriffvorrichtung mit einer Beleuchtung, da lediglich die LEDs and den Durchgangsöffnungen ausgerichtet werden müssen.

Gemäß einem weiteren Aspekt besteht die Möglichkeit, dass Innentürgriffvorrichtung einen an der Griffschale befestigten Träger aus einem metallischen Werkstoff aufweist, auf dem der LED-Streifen befestigt ist, wobei der Träger auf der dem Fahrzeuginnenraum abgewandten Seite der Griffschale an dieser befestigt ist. Der metallische und damit wärme(ab)leitende Träger ermöglicht einerseits ein einfaches Befestigen des LED-Streifens an der Griffschale und dient gleichzeitig als Kühlkörper.

Der Träger kann als eine Aluminium-Befestigungsschiene ausgeführt sein. Alternativ oder zusätzlich kann der Träger als U-Profil ausgeführt sein, was die Eigenschaften des Trägers als Kühlköper verbessert.

Zur Justierung der Helligkeit der Lichtquelle kann die Innentürgriffvorrichtung ferner einen auf dem Träger angeordneten Festspannungsregler zur Festlegung der Helligkeit der Lichtquelle aufweisen. Der Festspannungsregler und/oder die Lichtquelle kann über ein Türsteuermodul an die Bordnetzspannung angeschlossen sein. Dadurch werden nur vergleichsweise kurze elektrische Leitungen zum elektrischen Anschluss der Lichtquelle bzw. des Festspannungsreglers benötigt. Ferner kann der Träger als Kühlkörper für den Festspannungsregler dienen.

Gemäß einem weiteren Aspekt kann der Träger auf die Griffschale geklebt sein, was wiederum eine besonders einfache und kostengünstige Montagemöglichkeit darstellt, insbesondere für den Fall, dass die Türgriffbeleuchtung nachgerüstet wird.

Gemäß einer weiteren besonders bevorzugten Ausführungsform können die Durchgangsbohrungen an einem Dachbereich der Griffschale vorgesehen sein und/oder als vertikale Durchgangsbohrungen vorgesehen sein. Hierbei kann die Lichtquelle oberhalb der Griffschale auf der dem Fahrzeuginnenraum abgewandten Seite der Griffschale angeordnet sein, so dass der Türgriff über durch die Durchgangsöffnungen austretendes Licht der Lichtquelle von oben beleuchtbar ist.

Der Erfindung betrifft ferner ein Kraftfahrzeug mit einer Innentürgriffvorrichtung, wie in diesem Dokument beschrieben. Das Kraftfahrzeug kann ein Nutzfahrzeug, insbesondere ein Lastkraftwagen oder ein Omnibus sein.

Die zuvor beschrieben Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1: eine schematische Darstellung in einer Ansicht von oben auf eine Türgriffvorrichtung mit Durchgangsbohrungen, jedoch noch ohne montierte Lichtquelle;
- Figur 2: eine Ansicht von hinten der Türgriffvorrichtung aus Figur 1; und
- Figuren 3, 4 und 5: schematische Darstellungen eines auf einem U-Profil-Träger befestigten LED-Streifens.

Gleiche oder funktional äquivalente Elemente sind dabei in allen Figuren mit denselben Bezugszeichen beschrieben und zum Teil nicht gesondert beschrieben.

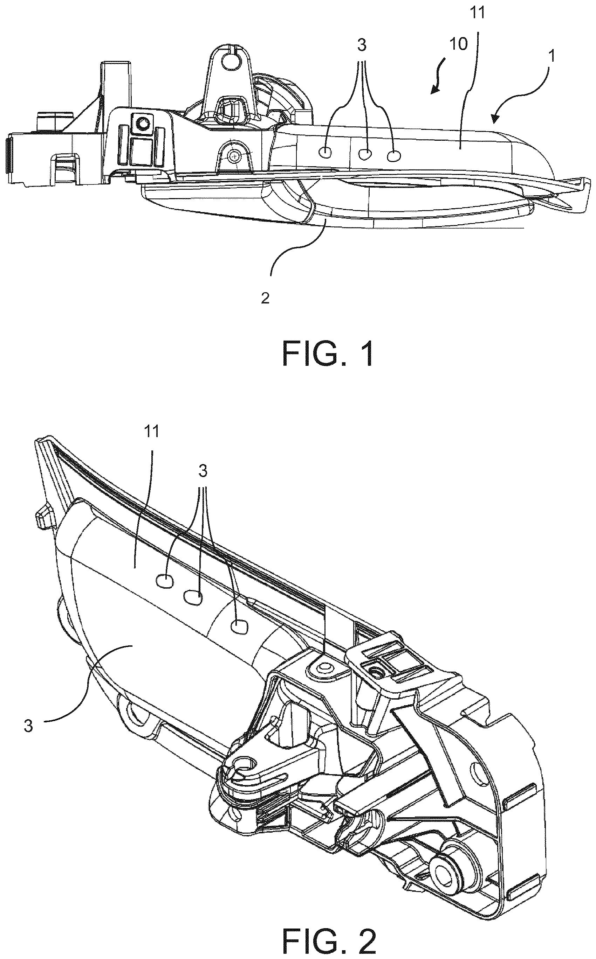

Figur 1 zeigt eine schematische Darstellung in einer Ansicht von oben auf eine Türgriffvorrichtung mit Durchgangsbohrungen, jedoch noch ohne montierte Lichtquelle. Figur 2 zeigt eine Ansicht von hinten der Türgriffvorrichtung aus Figur 1.

Die Innentürgriffvorrichtung 10 zur Betätigung einer Verriegelung einer vorderen Tür eines Fahrzeugs von der Innenseite umfasst in an sich bekannterweise eine Griffschale 1 und einen daran schwenkbeweglich gelagerten Türgriff bzw. Betätigungshebel 2. Vorliegend ist eine Griffschale der Tür links vorne eines Lastkraftwagen gezeigt. Die Griffschale 1 und der Türgriff 2 sind aus einem lichtundurchlässigen Material gebildet.

Vorliegend zeichnet sich die Griffschale 1 dadurch aus, dass sie mehrere Durchgangsöffnungen 3 in Form von Bohrungen aufweist, die in einem oberen Dachbereich 11 der Griffschale angebracht sind. Lediglich beispielhaft sind vorliegend drei Bohrungen vorgesehen. Die Bohrungen können auch nachträglich in eine Griffschale eingebracht werden, z. B. falls diese mit einer Beleuchtung für den Türgriff nachgerüstet werden soll.

Die Innentürgriffvorrichtung 10 umfasst ferner eine Lichtquelle 8 in Form eines LED-Streifens mit mehreren LEDs, wobei die Anzahl der LEDs 5 und deren Abstand auf die Anzahl der Bohrungen und deren Abstand abgestimmt ist.

Die Innentürgriffvorrichtung 10 ist in den Figuren 1 und 2 noch ohne montierte Beleuchtungseinrichtung gezeigt.

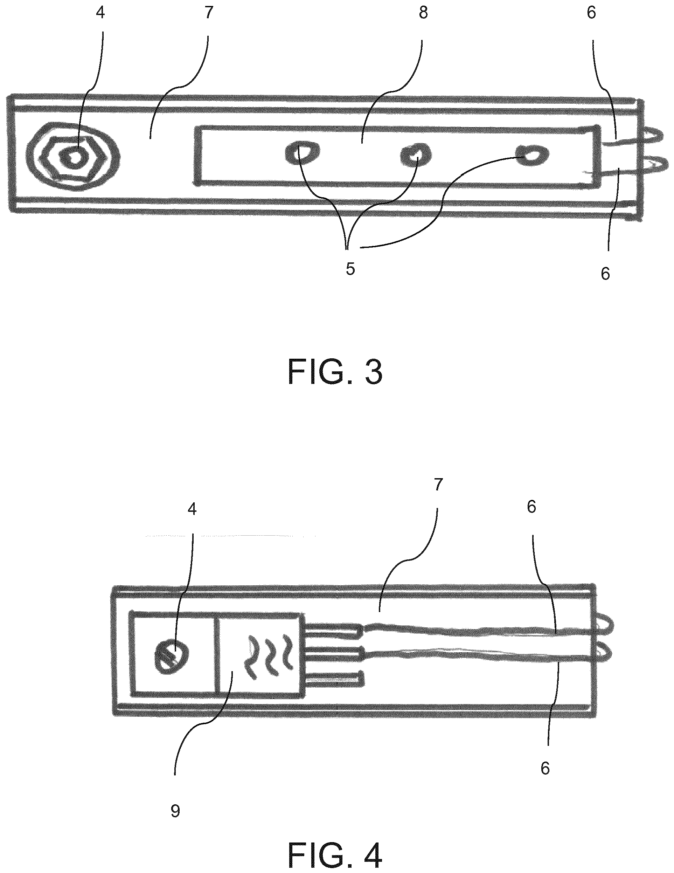

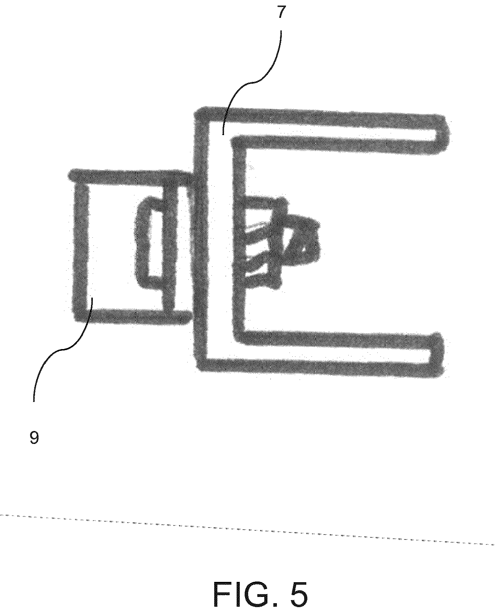

Die an der Griffschale 1 zu montierende Beleuchtungseinrichtung ist in den Figuren 3, 4 und 5 schematisch gezeigt. Diese umfasst einen selbstklebenden LED-Streifen 8 mit den LEDs 5, der auf einem U-Profil-Träger 7 aus Aluminium befestigt ist. Figur 3 zeigt eine Draufsicht auf die Seite des Trägers, an der der LED-Streifen 8 befestigt ist; Figur 4 zeigt hierzu die Rückansicht und damit die Seite, auf der ein Festspannungsregler 9 gehaltert ist. Figur 5 zeigt eine Schnittansicht hiervon.

Auf der zu den LEDs 5 gegenüberliegenden Seite des Trägers 7 ist der Festspannungsregler 9 mittels einer Schraube 4 befestigt. Der Festspannungsregler 9 dient zur Justierung der Helligkeit der LEDs 5. Der elektrische Anschluss an die Bordspannung kann beispielsweise direkt am Türsteuermodul der jeweiligen Tür erfolgen, was im Falle der Nachrüstung der Beleuchtung besonders vorteilhaft ist, da nur kurze zusätzliche elektrische Anschlussleitungen 6 zwischen Festspannungsregler 9 und LED-Leiste 8 und zwischen Festspannungsregler 9 und dem Türsteuermodul erforderlich sind.

Der Träger 7 wird auf der dem Fahrzeuginnenraum abgewandten Seite der Griffschale 1 an dieser befestigt, derart, dass die drei LEDs 5 genau über den Bohrungen 3 positioniert werden, so dass Licht der LEDs durch die Bohrungen 3 hindurchtreten kann und die dem Fahrzeuginnenraum zugewandte Seite der Griffschale 1 beleuchtet, und insbesondere den Türgriff. Der Träger 7 und die LED-Leiste 8 sind somit vom Fahrzeuginnenraum aus nicht sichtbar, da sie von der Griffschale 1 verdeckt sind.

Hierbei wird der Träger 7 mit dem LED-Streifen 8 oberhalb der Griffschale 1 im Bereich des Dachbereichs 11 der Griffschale angeordnet und zwar auf der dem Fahrzeuginnenraum abgewandten Seite der Griffschale. Auf diese Weise kann der Türgriff 2 über durch die Bohrungen 3 austretendes Licht der LEDs 5 von oben beleuchtet werden. Der Träger 7 kann hierzu mit der Griffschale 1 verklebt werden.

Zusammengefasst wird somit eine kostengünstige und einfache Möglichkeit zur Beleuchtung eines Innentürgriffes bereitgestellt, bei der die Haptik an der Innenseite der Griffschale nicht verändert wird und eine Beschädigungsgefahr der Lichtquelle beim Türöffnen vermieden wird. Ein besonderer Vorzug der vorliegenden Erfindung liegt ferner darin, dass diese besonders auch als Nachbaulösung geeignet ist, da die erforderlichen Durchgangsöffnungen nachträglich einfach durch Bohrungen anzubringen sind und für die Montage der Lichtquelle lediglich die Griffschale demontiert werden muss, was häufig durch Lösen einer Verschraubung möglich ist. Insbesondere die Ausführung als LED-Streifen benötigt wenig zusätzlich Bauraum. Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Griffschale
- 2: Türgriff
- 3: Durchgangsöffnung, z. B. Bohrung
- 4: Befestigungselement
- 5: LED
- 6: Elektrische Leitung
- 7: Träger, z. B. Aluminium-U-Profil-Befestigungsschiene
- 8: Lichtquelle, z. B. LED-Streifen
- 9: Festspannungsregler
- 10: Innentürgriffvorrichtung
- 11: Dachbereich der Griffschale

## Patentansprüche

1. Innentürgriffvorrichtung (10) zur Betätigung einer Verriegelung einer Tür eines Fahrzeugs von der Innenseite, umfassend eine Griffschale (1), einen daran beweglich gelagerten Türgriff (2) und mindestens eine Lichtquelle (8) zur Beleuchtung des Türgriffs (2), wobei die Griffschale (1) mindestens eine Durchgangsöffnung (3) aufweist und die Lichtquelle (8) im Bereich der mindestens einen Durchgangsöffnung (3) auf einer dem Fahrzeuginnenraum abgewandten Seite der Griffschale (1) angeordnet ist, so dass der Türgriff (2) über durch die mindestens eine Durchgangsöffnung (3) austretendes Licht der Lichtquelle (8) beleuchtbar ist;
**dadurch gekennzeichnet, dass**
mehrere Durchgangsöffnungen (3) vorgesehen sind und die Lichtquelle (8) ein LED-Streifen (8) ist, vorzugsweise ein selbstklebender LED-Streifen, wobei eine Anzahl und ein Abstand der LEDs (5) des LED-Streifens (8) einer Anzahl und einem Abstand der Durchgangsöffnungen (3) entspricht.

2. Innentürgriffvorrichtung (10) nach Anspruch 1, **dadurch gekennzeichnet, dass** die Durchgangsöffnungen (3)
a) in einem oberen Bereich der Griffschale (1) angeordnet sind; und/oder
b) als Durchgangsbohrungen ausgeführt sind.

3. Innentürgriffvorrichtung (10) nach Anspruch 1 oder 2, **gekennzeichnet durch** einen an der Griffschale (1) befestigten Träger (7) aus einem metallischen Werkstoff, auf dem der LED-Streifen (8) befestigt ist, wobei der Träger (7) auf der dem Fahrzeuginnenraum abgewandten Seite der Griffschale (1) an dieser befestigt ist.

4. Innentürgriffvorrichtung (10) nach Anspruch 3, **gekennzeichnet durch** einen auf dem Träger (7) angeordneten Festspannungsregler (9) zur Festlegung der Helligkeit der Lichtquelle, der vorzugsweise über ein Türsteuermodul an die Bordnetzspannung angeschlossen ist.

5. Innentürgriffvorrichtung (10) nach Anspruch 3 oder 4, **dadurch gekennzeichnet, dass** der Träger (7) als eine Aluminium-Befestigungsschiene, vorzugsweise als U-Profil, ausgeführt ist.

6. Innentürgriffvorrichtung (10) nach einem der Ansprüche 3 bis 5, **dadurch gekennzeichnet, dass** der Träger (7) auf die Griffschale geklebt ist.

7. Innentürgriffvorrichtung (10) nach einem der vorhergehenden Ansprüche, **dadurch gekennzeichnet, dass** die Durchgangsbohrungen (3) an einem Dachbereich (11) der Griffschale (1) vorgesehen ist und als vertikale Durchgangsbohrung vorgesehen ist, wobei die Lichtquelle oberhalb der Griffschale (1) auf der dem Fahrzeuginnenraum abgewandten Seite der Griffschale angeordnet ist, so dass der Türgriff (2) über durch die mindestens eine Durchgangsöffnung austretendes Licht der Lichtquelle von oben beleuchtbar ist.

8. Innentürgriffvorrichtung (10) nach einem der vorhergehenden Ansprüche, **dadurch gekennzeichnet, dass** die Griffschale (1) und der Türgriff (2) durch ein lichtundurchlässiges Material gebildet sind.

9. Kraftfahrzeug, vorzugsweise Nutzfahrzeug, umfassend eine Innentürgriffvorrichtung (10) nach einem der vorhergehenden Ansprüche.

## Claims

1. An internal door handle apparatus (10) for actuating a lock of a door of a vehicle from the inside, comprising a grip plate (1), a door handle (2) movably mounted thereto and at least one light source (8) for illuminating the door handle (2), wherein the grip plate (1) has at least one through-opening (3) and the light source (8) is arranged in the region of the at least one through-opening (3) on a side of the grip plate (1) facing away from the vehicle interior, with the result that the door handle (2) is able to be illuminated by light from the light source (8) that is emerging through the at least one through-opening (4);
**characterized in that**
a plurality of through-openings (3) are provided and the light source (8) is an LED strip (8), preferably a self-adhering LED strip, wherein a number and a distance of the LEDs (5) of the LED strip (8) correspond to a number and a distance of the through-openings (3).

2. The internal door handle apparatus (10) according to Claim 1, **characterized in that** the through-openings (3)
a) are arranged in an upper region of the grip plate (1); and/or
b) are embodied in the form of through-bores.

3. The internal door handle apparatus (10) according to Claim 1 or 2, **characterized by** a carrier (7) made of a metallic material, which is attached to the grip plate (1) and to which the LED strip (8) is attached, wherein the carrier (7) is attached to the grip plate (1) on the side of the latter facing away from the vehicle interior.

4. The internal door handle apparatus (10) according to Claim 3, **characterized by** a fixed voltage regulator (9), which is arranged on the carrier (7) and is preferably connected to the onboard network voltage via a door control module, for fixing the brightness of the light source.

5. The internal door handle apparatus (10) according to Claim 3 or 4, **characterized in that** the carrier (7) is embodied in the form of an aluminium attachment rail, preferably in the form of a U-profile.

6. The internal door handle apparatus (10) according to one of Claims 3 to 5, **characterized in that** the carrier (7) is adhesively fixed to the grip plate.

7. The internal door handle apparatus (10) according to one of the preceding claims, **characterized in that** the through-bores (3) are provided at a roof region (11) of the grip plate (1) in the form of vertical through-bores, wherein the light source is arranged above the grip plate (1) on the side of the grip plate facing away from the vehicle interior, with the result that the door handle (2) is able to be illuminated from above by light from the light source that is emerging through the at least one through-opening.

8. The internal door handle apparatus (10) according to one of the preceding claims, **characterized in that** the grip plate (1) and the door handle (2) are formed by an opaque material.

9. A motor vehicle, preferably a commercial vehicle, comprising an internal door handle apparatus (10) according to one of the preceding claims.

## Revendications

1. Dispositif de poignée de portière intérieure (10) pour l'actionnement d'un verrou d'une portière d'un véhicule depuis le côté intérieur, comprenant une enveloppe de poignée (1), une poignée de portière (2) montée mobile sur celle-ci et au moins une source de lumière (8) pour l'éclairage de la poignée de portière (2), l'enveloppe de poignée (1) comprenant au moins une ouverture de passage (3) et la source de lumière (8) étant agencée dans la zone de l'au moins une ouverture de passage (3) sur un côté, détourné de l'espace intérieur de véhicule, de l'enveloppe de poignée (1), de telle sorte que la poignée de portière (2) puisse être éclairée par l'intermédiaire de la lumière de la source de lumière sortant au travers de l'au moins une ouverture de passage (3) ;
**caractérisé en ce que**
plusieurs ouvertures de passage (3) sont prévues et la source de lumière (8) est une bande de LED (8), de préférence une bande de LED autocollante, un nombre et un écart des LED (5) de la bande de LED (8) correspondant à un nombre et un écart des ouvertures de passage (3).

2. Dispositif de poignée de portière intérieure (10) selon la revendication 1, **caractérisé en ce que** les ouvertures de passage (3)
a) sont agencées dans une zone supérieure de l'enveloppe de poignée (1) ; et/ou
b) sont conçues sous la forme d'alésages de passage.

3. Dispositif de poignée de portière intérieure (10) selon la revendication 1 ou 2, **caractérisé par** un support (7) en un matériau métallique fixé sur l'enveloppe de poignée (1), sur lequel la bande de LED (8) est fixée, le support (7) étant fixé sur le côté, détourné de l'espace intérieur de véhicule, de l'enveloppe de poignée (1) sur celle-ci.

4. Dispositif de poignée de portière intérieure (10) selon la revendication 3, **caractérisé par** un régulateur de tension fixe (9) agencé sur le support (7) pour l'établissement de la luminosité de la source de lumière, qui est de préférence raccordé par l'intermédiaire d'un module de commande de portière à la tension de réseau de bord.

5. Dispositif de poignée de portière intérieure (10) selon la revendication 3 ou 4, **caractérisé en ce que** le support (7) est conçu sous la forme d'un rail de fixation en aluminium, de préférence sous la forme d'un profilé en U.

6. Dispositif de poignée de portière intérieure (10) selon l'une quelconque des revendications 3 à 5, **caractérisé en ce que** le support (7) est collé sur l'enveloppe de poignée.

7. Dispositif de poignée de portière intérieure (10) selon l'une quelconque des revendications précédentes, **caractérisé en ce que** l'alésage de passage (3) est prévu sur une zone de toit (11) de l'enveloppe de poignée (1) et est prévu sous la forme d'un alésage de passage vertical, la source de lumière étant agencée au-dessus de l'enveloppe de poignée (1) sur le côté, détourné de l'espace intérieur de véhicule, de l'enveloppe de poignée, de telle sorte que la poignée de portière (2) puisse être éclairée par l'intermédiaire de la lumière de la source de lumière sortant au travers de l'au moins une ouverture de passage depuis le haut.

8. Dispositif de poignée de portière intérieure (10) selon l'une quelconque des revendications précédentes, **caractérisé en ce que** l'enveloppe de poignée (1) et la poignée de porte (2) sont formées par un matériau imperméable à la lumière.

9. Véhicule automobile, notamment véhicule utilitaire, comprenant un dispositif de poignée de portière intérieure (10) selon l'une quelconque des revendications précédentes.
